# EUROPEAN PATENT SPECIFICATION

(11) **EP 2 609 131 B1**
(45) Date of publication and mention of the grant of the patent: **24.09.2014**
(21) Application number: 11748530.0
(22) Date of filing: 11.08.2011
(51) Int. Cl.: B29C 44/04, C08G 18/40, C08G 18/63, C08G 18/48, C08G 101/00

(54) **METHOD FOR MAKING RESILIENT LOW DENSITY POLYURETHANE FOAM HAVING LOW COMPRESSION SETS**
VERFAHREN ZUR HERSTELLUNG EINES ELASTISCHEN POLYURETHANSCHAUMES MIT NIEDRIGER DICHTE UND NIEDRIGEM DRUCKVERFORMUNGSRESTWERT
PROCÉDÉ DE PRÉPARATION DE MOUSSES SOUPLES DE POLYURÉTHANE DE FAIBLE DENSITÉ ET PRÉSENTANT UNE FAIBLE COMPRESSION RÉMANENTE

(30) Priority: 24.08.2010 US 376407 P
(43) Date of publication of application: 03.07.2013
(73) Proprietor: Dow Global Technologies LLC, Midland, MI 48674 (US)
(72) Inventor: MIYAZAKI, Yoshiaki, 224-0033 (JP); ONODA, Hiromi, Shizuoka-Ken (JP)
(74) Representative: Beck Greener
(86) International application number: PCT/US2011/047340
(87) International publication number: WO 2012/027114

(56) References cited:
- US-A- 5 549 841
- US-A1- 2008 139 685
- US-A1- 2010 096 768

## Description

This application claims priority from United States Provisional Patent Application No. 61/376,407, filed 24 August 2010.

This invention relates to resilient polyurethane foam and methods for preparing those foams.

Flexible polyurethane foams are widely used in cushioning, seating and bedding applications. These foams fall mainly into two types. One type is a "viscoelastic" or "memory" foam, which is characterized by having low resiliency and a time-delayed and rate-dependent response to an applied stress. These foams recover slowly after being compressed, and are used mainly in certain types of bedding applications. The more common type of foam is a resilient foam which, when compressed, rapidly returns the energy used to compress the foam. Resilient foams provide much better support and recover their original shapes rapidly and with force after being compressed. This invention relates to the latter type of resilient foams.

A concern with resilient foams is compression set. Many cushioning foams that are used for seating and bedding applications tend not to recover completely after they are compressed under an applied load. The extent to which they fail to completely recover their original dimensions after the load is removed is referred to as compression set. Large compression sets indicate a significant failure of the foam to recover. Compression set is typically evaluated using a standardized test such as ISO 1856, in which a foam sample is compressed under an applied load under specified conditions, and then released. Compression set tests such as ISO 1856 can be conducted under high humidity conditions; compression set values obtained in such a manner are often referred to as "wet" compression sets. Wet compression sets are intended to predict the performance of a foam when used under high temperature and humidity conditions, as might be seen, for example, in tropical or semi-tropical climates or in summer months in some temperate areas. Wet compression sets tend to be higher than ambient, or "dry" compression sets. It is generally desirable that foam compression set values be as low as possible, consistent with other necessary foam properties such as resiliency and load-bearing.

There is a continuing demand to provide foams having lower and lower densities. Lower density foams tend to be less expensive (on a per-volume basis) because lesser quantities of raw materials are needed to produce the foam. On the other hand, there is a practical limit to which foam density can be reduced. The physical and mechanical properties of the foam begin to suffer if foam density becomes too low. Resiliency tends to be affected quite significantly as foam density drops below about 36 kg/m³. Compression set values also deteriorate badly with decreasing foam density.

Therefore, it is desirable to provide a polyurethane foam having a low density which retains good resiliency and low compression set.

In USP 5,549,841, polyurethane foam made using high (≥6) functionality polyols are said to have improved wet compression set properties. The foams are molded foams made in a cold molding process. USP 6,774,153 describes slabstock polyurethane foam made using a polyol which may have a high functionality, together with a 200-600 equivalent weight, high ethylene oxide polyol that has from 2 to 6 hydroxyl groups. The presence of the high ethylene oxide polyol is said to permit the formation of low density foams that have good properties, including a low compression set.

This invention is a process for making a resilient polyurethane foam comprising forming a foam formulation containing
(a) a dispersion of polymer particles in one or more polyether polyols, wherein each of said polyether polyols has a hydroxyl equivalent weight of 250 or more, the average equivalent weight of the polyether polyol(s) is from 1400 to 2200, the average nominal hydroxyl functionality of the polyether polyol(s) is from 3.5 to 5.0, the polyether polyol(s) have an average oxyethylene content of from 8 to 25% by weight and an average primary hydroxyl content of at least 50%, and wherein the polymer particles constitute from 8 to 30% of the weight of the dispersion;
(b) from about 2 to 10 parts by weight, per 100 parts by weight of component (a), of one or more high functionality, high-ethylene oxide polyols which have an average oxyethylene content of from 26 to 100% by weight, an average hydroxyl equivalent weight of from 1400 to 2200 and an average nominal hydroxyl functionality of from 6 to 10;
(c) from 4 to 7 parts by weight water per 100 parts by weight of component (a);
(d) at least one organic polyisocyanate; and
(e) at least one surfactant and at least one catalyst for the reaction of an isocyanate group with a hydroxyl group, and
introducing the foam formulation into a mold and curing the foam formulation in the mold to form a polyurethane foam having a core density of from 24 to 56 kg/m³.

The process produces a foam that has excellent resiliency and low compression sets, including low wet compression sets. At equivalent foam densities, the foam of the invention typically has a higher resiliency and lower compression set than otherwise like foams made using lower, more conventional levels of the component (b) material. The invention permits foam density to be decreased while retaining resiliency and compression set values.

This invention is also a resilient polyurethane foam which is the reaction product of reactants that include
(a) a dispersion of polymer particles in one or more polyether polyols, wherein each of said polyether polyols has a hydroxyl equivalent weight of 250 or more, the average equivalent weight of the polyether polyol(s) is from 1400 to 2200, the average nominal hydroxyl functionality of the polyether polyol(s) is from 3.5 to 5.0, the polyether polyol(s) have an average oxyethylene content of from 8 to 25% by weight and an average primary hydroxyl content of at least 50%, and wherein the polymer particles constitute from 8 to 30% of the weight of the dispersion;
(b) from 2 to 10 parts by weight, per 100 parts by weight of component (a), of one or more high functionality, high-ethylene oxide polyols which have an average oxyethylene content of from 26 to 100% by weight, an average hydroxyl equivalent weight of from 1400 to 2200 and an average nominal hydroxyl functionality of from 6 to 10;
(c) from 4 to 7 parts by weight water per 100 parts by weight of component (a);
(d) at least one organic polyisocyanate,
wherein the polyurethane foam has a core density of from 24 to 56 kg/m³, a resiliency of at least 60% as measured by ISO 8307, a 50% dry compression set of no greater than 8% as measured by ISO 1856 with a 70°C oven and a 50% wet compression set of no greater than 20% as measured by ISO 1856 with a 50°C/95% relative humidity oven.

The foams of the invention are useful in cushioning, seating and bedding applications. An application of particular interest is automotive seating.

Component (a) is a dispersion of polymer particles in one or more polyether polyols. The polymer particles constitute from 8 to 30%, preferably from 8 to 15% of the total weight of component (a). The polymer particles may be, for example, a polymer of copolymer of a vinyl aromatic monomer such as styrene; a polymer or copolymer of acrylonitrile; a polyurethane; a polyurea; a polyurethane-urea; or other suitable polymer. Styrene-acrylonitrile copolymer particles are a particularly preferred type. The dispersed polymer particles may be polymerized *in situ* within one or more of the polyether polyol(s). The dispersed polymer particles have particle sizes from 100 nm to 50 microns and preferably from 500 nm to about 30 microns. The dispersed polymer particles are preferably grafted onto at least a portion of the polyether polyol molecules.

The polyether polyol(s) in component (a) each have a hydroxyl equivalent weight of at least 250. The average hydroxyl equivalent weight of the polyether polyol(s) in component (a) is within the range of from 1400 to 2200. The average hydroxyl equivalent weight of the polyether polyol(s) is preferably from 1500 to 2000. The average nominal hydroxyl functionality of the polyether polyol(s) in component (a) is from 3.8 to 5.0 hydroxyl groups per molecule. The average nominal hydroxyl functionality of the polyether polyols is preferably from 3.8 to 4.7. The "nominal" hydroxyl functionality of a polyether polyol, for purposes of this invention, is equal to the average number of oxyalkylatable functional groups on the initiator compounds used to prepare the polyol; actual polyether polyol functionalities are often somewhat lower than the nominal values due to side-reactions that can occur during the polymerization of alkylene oxides, especially propylene oxide.

The average oxyethylene content (*i.e.,* content of polymerized ethylene oxide) of the polyether polyol(s) in component (a) is from 8 to 25% by weight. The average ethylene oxide content of the polyether polyols is preferably from 10 to 20 by weight. The average primary hydroxyl content (*i.e*., proportion of the hydroxyl groups which are primary hydroxyls) is at least 50%. The average primary hydroxyl content of the polyether polyols preferably is at least 65% and more preferably at least 70%.

The polyether polyol(s) in component (a) are each preferably a copolymer of propylene oxide and ethylene oxide. The ethylene oxide may be randomly polymerized with the propylene oxide and/or may be present as terminal poly(oxyethylene) groups.

The polyether polyol in the component (a) material may consist of a single polyol that has the attributes described above, or may consist of a mixture of two or more polyether polyols that on average have the foregoing attributes. It is expected that a mixture of two or more polyether polyols will be present in most cases. A typical way of producing component (a) is to form a dispersion of polymer particles in one polyether polyol, and to mix that dispersion with one or more additional polyether polyols. If a mixture of two or more polyether polyols is present, it is not necessary that each of the individual polyols has the foregoing attributes, as long as the mixture of polyether polyols as a whole has those attributes. Thus, individual polyether polyols contained within component (a) may have hydroxyl equivalent weights as low as 250 to as high as 4000 or more; average hydroxyl functionalities of as low as about 2 to as high as about 12; ethylene oxide contents as low as 0 or as high as about 25%, and primary hydroxyl contents as low as zero percent and as high as 100%.

A preferred polyether polyol mixture is a mixture of one or more polyols having a nominal hydroxyl functional of two or three, and one or more polyols having a nominal functionality of at least four, preferably six or eight. A polyether polyol having a nominal hydroxyl functionality of two is suitably prepared by polymerizing propylene oxide and ethylene oxide onto a difunctional initiator compound. Examples of difunctional initiator compounds include water, ethylene glycol, 1,2- or 1,3-propane diol, 1,4-butane diol, N-methyldiethanolamine, N-methyldipropanolamine or alkoxylated derivatives of any of the foregoing. A polyether polyol having a nominal functionality of three is suitably prepared by polymerizing propylene oxide and ethylene oxide onto a trifunctional initiator compound. Examples of trifunctional initiator compounds include glycerine, trimethylol propane, trimethylolethane or alkoxylated derivatives of any of the foregoing, as well as amine compounds such as N-(2-hydroxyethyl)-N-methyl-1,3-propane diamine and N-(2-hydroxyethyl)-N-methyl-1,2-ethane diamine. Polyether polyols having nominal functionalities of four, six or eight are suitably prepared by polymerizing propylene oxide and ethylene oxide onto an initiator having four, six or eight hydroxyl groups, such as pentaerythritol, 3,3'-diamino-N-methyldipropylamine, 3,3'-diamino-N-ethyldipropylamine and 2,2'-diamino-N-methyldiethylamine, sorbitol, sucrose and the like. Mixtures of polyether polyols can be prepared directly by polymerizing propylene oxide and ethylene oxide onto a mixture of two or more initiator compounds that have different functionalities. In such a case, the nominal functionality of the polyether polyol is determined by the functionalities of the individual initiator compounds and the relative proportions thereof present in the mixture. An example of a polyether polyol mixture of this type is one coinitiated with a mixture of a trifunctional initiator such as glycerine or trimethylolpropane and a 6-8 functional initiator such as sorbitol or sucrose, such an initiator mixture suitably having a nominal functionality of from 4 to 5.5.

Polyols initiated with amine compounds and which therefore contain tertiary amino groups tend to be auto-catalytic. They provide the benefit of requiring reduced levels of added amine and/or organotin catalysts, and can be used herein provided the polyols (or mixture containing such polyols, as the case may be) otherwise have the characteristics described above. Examples of such polyols include those described in USP 6,762,274.

One specific component (a) is a blend of (1) a dispersion of polystyrene, polyacrylonitrile or poly(styrene-co-acrylonitrile) particles in a nominally trifunctional polyether polyol with (2) a polyether polyol coinitiated with glycerine or trimethylolpropane and sucrose or sorbitol and having a nominal functionality of from 4 to 5.5.

Component (b) is a polyether that contains at least 30%, preferably at least 50%, by weight of polymerized ethylene oxide. The content of polymerized ethylene oxide may be as high as 100%. A preferred range is from 50 to 80% by weight, with the remaining portion the polyether being, for example, one or more polymerized higher alkylene oxides (such as propylene oxide, butylene oxide or tetramethylene oxide) and the residue of an initiator compound. Component (b) has an average hydroxyl equivalent weight of from 1400 to 2200. Its nominal hydroxyl functionality of from 6 to 10. Polyols of this type are sometimes used at low levels (up to about 1.5% based on polyols) in flexible polyurethane foam formulations to promote cell opening; a commercially available polyol of this type that is sold for use as a cell opener is Voranol® 4053 polyol, available from The Dow Chemical Company. In this invention, amounts of this material are used in excess over what is conventionally used for cell opening. At least about 2, preferably at least 2.5 parts by weight of component (b) are present in the foam formulation per 100 parts by weight of component (a). Up to 10 parts by weight of component (b) may be present in the foam formulation, per 100 parts by weight of component (a). A preferred amount is from 3 to 10, especially from 4 to 10 or from 5 to 8 parts by weight per 100 parts by weight of component (a).

Component (c) is water which, as well known, performs both a blowing function and chain extension function by reacting with isocyanate groups to generate carbon dioxide and form urea linkages. Water is preferably the sole blowing agent in the foam formulation, although it is possible to include an auxiliary blowing agent within the foam formulation, in addition to the water. The auxiliary blowing agent may be a chemical type such as a carbamate or a physical blowing agent such as, for example, carbon dioxide or a low-boiling hydrocarbon, hydrofluorocarbon or hydrochlorofluorocarbon. In the preferred case in which water is the sole blowing agent, the amount of water is an important contributing factor to the density of the resulting foam. At least 4, preferably at least 4.5 and more preferably at least 5 parts by weight of water are present per 100 parts of component (a). Up to 7 parts of water can be used, preferably up to 6 parts of water, again by weight per 100 parts by weight of component (a).

Component (d) is an organic polyisocyanate or mixture thereof having an average of 1.8 or more isocyanate groups per molecule. The isocyanate functionality is preferably from about 1.9 to 4, and more preferably from 1.9 to 3.5 and especially from 1.9 to 2.5. Suitable polyisocyanates include aromatic, aliphatic and cycloaliphatic polyisocyanates. Aromatic polyisocyanates are generally preferred based on cost, availability and properties imparted to the product polyurethane. Exemplary polyisocyanates include, for example, m-phenylene diisocyanate, 2,4- and/or 2,6-toluene diisocyanate (TDI), the various isomers of diphenylmethanediisocyanate (MDI), hexamethylene-1,6-diisocyanate, tetramethylene-1,4-diisocyanate, cyclohexane-1,4-diisocyanate, hexahydrotoluene diisocyanate, hydrogenated MDI (H₁₂ MDI), naphthylene-1,5-diisocyanate, methoxyphenyl-2,4-diisocyanate, 4,4'-biphenylene diisocyanate, 3,3'-dimethoxy-4,4'-biphenyl diisocyanate, 3,3'-dimethyldiphenylmethane-4,4'-diisocyanate, 4,4',4"-triphenylmethane tri-isocyanate, polymethylene polyphenylisocyanates or mixtures thereof with MDI (polymeric MDI), hydrogenated polymethylene polyphenylisocyanates, toluene-2,4,6-triisocyanate, and 4,4'-dimethyl diphenylmethane-2,2',5,5'-tetraisocyanate. Preferred polyisocyanates include MDI and derivatives of MDI such as biuret-modified "liquid" MDI products and polymeric MDI, as well as mixtures of the 2,4- and 2,6- isomers of TDI. An especially preferred polyisocyanate is a mixture of TDI isomers with MDI or polymeric MDI, in which the TDI isomers constitutes from 60-90% by weight of the mixture, and in which the 2,4-TDI isomer constitutes at least 70% by weight of the TDI isomers. Such an isocyanate product is available as Voranate ® TM-20 from The Dow Chemical Company.

The amount of polyisocyanate that is used typically is sufficient to provide an isocyanate index of from 70 to 125. A preferred range is from 80 to 115 and a more preferred range is from 90 to 105. Isocyanate index is 100 times the ratio of isocyanate groups to isocyanate-reactive groups in the formulation.

Components (a) - (d) react together to form the polyurethane foam of the invention. In addition to components (a) - (d), the foam formulation may contain other reactive ingredients that have equivalent weights per isocyanate-reactive group of up to 249. These optional other reactive materials include chain extenders, which have exactly two isocyanate-reactive groups per molecule, and cross-linkers, which have three or more isocyanate-reactive groups per molecule. Chain extenders and cross-linkers preferably have equivalent weights from 30 to 150 and more preferably from 30 to 125. The isocyanate-reactive groups may be, for example, hydroxyl, primary amino or secondary amino groups. Examples of chain extenders and crosslinkers include alkylene glycols such as ethylene glycol, 1,2- or 1,3-propylene glycol, 1,4-butanediol, 1,6-hexanediol, and the like; glycol ethers such as diethylene glycol, triethylene glycol, dipropylene glycol, tripropylene glycol and the like; cyclohexane dimethanol; glycerine; trimethylolpropane; triethanolamine; diethanolamine and the like.

Chain extenders and cross-linkers, if present, each are generally used in small amounts, typically no more than about 5 parts by weight of each per 100 parts of component (a). Chain extenders and/or crosslinkers, if present at all, are each preferably present in an amount from 0.1 to 2 parts, more preferably from 0.1 to 1 part by weight per 100 parts of component (a).

The resilient, flexible polyurethane foam of the invention is the reaction product of the foregoing reactive ingredients of the foam formulation. In addition to the reactive ingredients, the foam formulation includes at least one catalyst and at least one silicone surfactant.

One preferred type of catalyst is a tertiary amine catalyst. The tertiary amine catalyst may be any compound possessing at least one tertiary amine group and which has catalytic activity for the reaction between a polyol and a polyisocyanate and at least one tertiary amine group. Representative tertiary amine catalysts include trimethylamine, triethylamine, N-methylmorpholine, N-ethylmorpholine, N,N-dimethylbenzylamine, N,N-dimethylethanolamine, N,N,N',N'-tetramethyl-1,4-butanediamine, N,N-dimethylpiperazine, 1,4-diazobicyclo-2,2,2-octane, bis(dimethylaminoethyl)ether, bis(2-dimethylaminoethyl) ether, morpholine,4,4'-(oxydi-2,1-ethanediyl)bis, triethylenediamine, pentamethyl diethylene triamine, dimethyl cyclohexyl amine, N-cetyl N,N-dimethyl amine, N-coco-morpholine, N,N-dimethyl aminomethyl N-methyl ethanol amine, N, N, N'-trimethyl-N'-hydroxyethyl bis(aminoethyl) ether, N,N-bis(3-dimethylaminopropyl)N-isopropanolamine, (N,N-dimethyl) amino-ethoxy ethanol, N, N, N', N'-tetramethyl hexane diamine, 1,8-diazabicyclo-5,4,0-undecene-7, N,N-dimorpholinodiethyl ether, N-methyl imidazole, dimethyl aminopropyl dipropanolamine, bis(dimethylaminopropyl)amino-2-propanol, tetramethylamino bis (propylamine), (dimethyl(aminoethoxyethyl))((dimethyl amine)ethyl)ether, tris(dimethylamino propyl) amine, dicyclohexyl methyl amine, bis(N,N-dimethyl-3-aminopropyl) amine, 1,2-ethylene piperidine and methylhydroxyethyl piperazine.

The foam formulation may contain one or more other catalysts, in addition to or instead of the tertiary amine catalyst mentioned before. Suitable such catalysts include, for example:
1) tertiary phosphines such as trialkylphosphines and dialkylbenzylphosphines;
2) chelates of various metals, such as those which can be obtained from acetylacetone, benzoylacetone, trifluoroacetyl acetone, ethyl acetoacetate and the like, with metals such as Be, Mg, Zn, Cd, Pd, Ti, Zr, Sn, As, Bi, Cr, Mo, Mn, Fe, Co and Ni;
3) acidic metal salts of strong acids, such as ferric chloride, stannic chloride, stannous chloride, antimony trichloride, bismuth nitrate and bismuth chloride;
4) strong bases, such as alkali and alkaline earth metal hydroxides, alkoxides and phenoxides;
5) alcoholates and phenolates of various metals, such as Ti(OR)₄, Sn(OR)₄ and Al(OR)₃, wherein R is alkyl or aryl, and the reaction products of the alcoholates with carboxylic acids, beta-diketones and 2-(N,N-dialkylamino)alcohols;
6) alkaline earth metal, Bi, Pb, Sn or Al carboxylate salts; and
7) tetravalent tin compounds, and tri- or pentavalent bismuth, antimony or arsenic compounds.

Of particular interest are tin carboxylates and tetravalent tin compounds. Examples of these include stannous octoate, dibutyl tin diacetate, dibutyl tin dilaurate, dibutyl tin dimercaptide, dialkyl tin dialkylmercapto acids, dibutyl tin oxide, dimethyl tin dimercaptide, dimethyl tin diisooctylmercaptoacetate, and the like.

Catalysts are typically used in small amounts. For example, the total amount of catalyst used may be 0.0015 to 5, preferably from 0.01 to 1 part by weight per 100 parts by weight of component (a). Metallic catalysts, in particular tin catalysts, are typically used in amounts towards the low end of these ranges.

One or more silicone surfactants is preferably included in the foam formulation to help regulate cell size and/or to stabilize the foam as it expands and cures. The presence of the silicone surfactants may also contribute to the good compression set values seen with this invention. One type of useful silicone surfactant is a polydimethylsiloxane type. Another useful type of silicone surfactant has a polysiloxane backbone which is modified with poly(oxyalkylene groups). Mixtures containing at least one surfactant of each type can be used.

Surfactants of the latter type may contain high atomic mass polyoxyalkylene pendant groups have an average atomic mass of from about 1400 to about 6000. The silicone backbone preferably also contains low atomic mass polyoxyalkylene pendant groups having an average atomic mass of from about 300 to about 750. It is more preferred that the silicone backbone contains both high and low atomic mass polyoxyalkylene pendant groups which, taken together, have an average atomic mass of about 1000-2000, especially 1100-1800. The silicone surfactant preferably contains about 45-360, especially about 90-260, silicone repeating unitslmolecule. Preferably, about 6-30% of such silicone repeating units contain a pendant high or low atomic mass polyoxyalkylene group. Surfactants of these types are described, for example, in US 5,145,879 and EP 0 712 884 B1.

Among the suitable silicone surfactants are those marketed by Evonik under the trade names Tegostab B8738LF2, Tegostab B8724LF2, Tegostab B8727LF2, Tegostab B8715LF2, Tegostab B8734LF2 and Tegostab B8737LF2, and that marketed by Dow Corning Corporation as SZ1346 surfactant. From about 0.25-6, preferably from about 0.5-3 parts by weight of silicone surfactant(s) are suitably used per 100 parts by weight of component (a). In some embodiments, the foam formulation contains, per 100 parts by weight of component (a), from 0.25 to 2.5 parts by weight of a polydimethylsiloxane surfactant and from 0.25 to 2 parts by weight of a silicone surfactant having a silicone backbone modified with poly(oxyalkylene groups).

Various additional components may be included in the foam formulation. These include, for example, fillers, plasticizers, colorants, preservatives, odor masks, flame retardants, biocides, antioxidants, UV stabilizers and antistatic agents.

Foam is prepared from the foregoing ingredients by mixing them to form a foam formulation, introducing the foam formulation into the mold and curing the foam formulation in the mold to form a polyurethane foam. Some or all of the isocyanate-reactive ingredients can be mixed together in various sub-combinations before being brought into contact with the organic polyisocyanate. Catalysts and surfactants are typically blended into components (a) and/or (b). The components are conveniently at a temperature of from about 10°C to about 50°C when the organic isocyanate is brought into contact with the isocyanate-reactive materials. Curing in many cases proceeds adequately without the application of heat to the mixture. However, the curing mixture may be heated if desired to drive the polymerization and foaming processes.

In a molding process, the reaction mixture is formed and then dispensed into a closed mold where curing occurs. Enough of the reaction mixture is charged to the mold so that the mixture expands and fills the mold and produces a foam having the aforementioned density. The mold may be preheated, such as to a temperature of from about 50 to 80°C. The filled mold may be further heated, such as by placing the filled mold into an oven to cure the foam. Such a process is commonly known as a "hot molding" process. In a preferred process, the foam formulation is allowed to cure in the mold without further heating (a "cold mold" process). The mixture is cured in the mold until it can be removed without damage or permanent distortion. The demolded foam can be postcured.

Foam made in accordance with the invention advantageously has a core density in the range of 24 to 56 kg/m³. The advantages of the invention are particularly apparent when the foam has a somewhat low density, such as from 26 to 40 kg/m³ or from 26 to 33 kg/m³. Foams having a density of from 27 to 31 kg/m³ are of particular interest. Density is conveniently measured according to ISO 845, after removing any exterior skin that may be formed during the foaming process. The foam a resilient flexible type. Resiliency is conveniently determined using a ball rebound test such as ISO 8307, which measures the height to which a dropped ball rebounds from the surface of the foam when dropped under specified conditions. Under the ISO 8307 test, a cured foam in accordance with the invention typically exhibits a resiliency of at least 50%, preferably at least 60% and more preferably at least 65%, even when the foam has a density as low as from 26 to 40 kg/m³ or even as low as from 26 to 33 kg/m³. The ability to produce a resilient foam at such low foam densities is an important and unexpected advantage of the invention. With conventional foams, resiliency tends to decrease significantly with decreasing foam density.

Another advantage of the invention is that the foams exhibit low compression sets, even at low foam core densities in the range of 26 to 33 kg/m³. The low compression sets are seen in both "dry" and "wet" compression set testing. Both "dry" and "wet" compression set testing are conveniently performed according to ISO 1856. In the "dry" test, the samples are compressed to 50% of their original thickness, held for 22 hours in a 70°C/ambient humidity oven and then permitted to re-expand. The "wet" test is performed in the same way, except the oven is maintained at 50°C and 95% humidity. Dry compression sets are typically no greater than 8%, and more preferably no greater than 6%. Wet compression sets are typically no greater than 20% and are often from 15 to 20% at a foam density of from 26 to 33 kg/m³. Foam according to the invention often exhibits a wet compression set of from 20% or less and a resiliency of 60% or more at a core foam density of from 26 to 33 kg/m³.

Foam made in accordance with the invention are useful in a variety of packaging, seating and other cushioning applications, such as mattresses, furniture cushions, automotive seating, bumper pads, sport and medical equipment, helmet liners, pilot seats, earplugs, and various other noise and vibration dampening applications.

The following examples are provided to illustrate the invention, but are not intended to limit the scope thereof. All parts and percentages are by weight unless otherwise indicated.

### Examples 1-5 and Comparative Foams A and B

Foam Examples 1-5 and Comparative Foams A and B are made from the formulations in Table 1:

**Table 1**

| Ingredient | Parts by Weight | | | | | | |
|---|---|---|---|---|---|---|---|
| | Comp. A | Comp. B | Ex. 1 | Ex. 2 | Ex. 3 | Ex. 4 | Ex. 5 |
| Polyol A¹ | 75 | 75 | 70 | 70 | 70 | 70 | 70 |
| Polymer Polyol² | 25 | 25 | 30 | 30 | 30 | 30 | 30 |
| Glycerin | 0.5 | 0.5 | 0.5 | 0.5 | 0.5 | 0.5 | 0.5 |
| High-functionality, high EO polyol³ | 1.2 | 1.2 | 2 | 2 | 2 | 6 | 6 |
| Water | 4.4 | 4.4 | 4.8 | 4.8 | 4.8 | 5.4 | 5.4 |
| Silicone Surf. A⁴ | 1.3 | 1.3 | 2.0 | 1.3 | 1.6 | 2.0 | 2.0 |
| Silicone Surf. B⁵ | 0 | 0 | 0 | 0 | 0 | 0.5 | 0.5 |
| Catalysts | 0.5 | 0.5 | 0.5 | 0.5 | 0.5 | 0.5 | 0.5 |
| Polyisocyanate (index) | 100 | 100 | 100 | 100 | 100 | 100 | 100 |

| | | | | | | | |
|---|---|---|---|---|---|---|---|
| ¹Polyol A is a mixture of a nominally trifunctional ethylene-oxide capped poly(propylene oxide) having a hydroxyl equivalent weight of about 1750, and a nominally eight-functional ethylene oxide-capped poly(propylene oxide having a hydroxyl equivalent weight of about 1750. Polyol A has an average functionality of about 4.7 hydroxyl groups/molecule and an ethylene oxide content of about 15% by weight. ²A graft dispersion of 40% by weight styrene-acrylonitrile copolymer particles in a nominally trifunctional ethylene oxide-capped poly(propylene oxide) having a hydroxyl equivalent weight of about 1580 and an ethylene oxide content of about 17% by weight. ³A nominally 7.5-functional copolymer of propylene oxide and greater than 30% by weight ethylene oxide having a molecular weight of about 12,500. ⁴A silicone surfactant sold as SZ1345 by Dow Corning Corporation. ⁵A silicone surfactant sold as Tegostab B8727LF2 by Evonik. | | | | | | | |

In Examples 1-5, Polyol A and the Polymer Polyol together constitute the component (a) material. Polyol A and the Polymer Polyol together have a solids content of about 12% by weight. The polyether polyols in Polyol A and the Polymer Polyol collectively have an average nominal hydroxyl functionality of about 4-4.5, an average equivalent weight of about 1650-1700, an oxyethylene content of about 15-17% by weight and in excess of 70% primary hydroxyl groups.

Foams are prepared by pre-blending all ingredients except the polyisocyanate, then mixing the pre-blended components with the polyisocyanate for five seconds in a high-speed mixer. Component temperatures are 22°C. The reaction mixture is poured into a 400 mm X 400 mm X 10 mm mold which is at a temperature of 65°C, and allowed to cure in the mold for 6 minutes. Foam hardness (25% ILD and 65% ILD) is measured on the foam according to ISO 2439 after the foam has cooled to room temperature. The foam is cut into test specimens. Core density is measured according to ISO 845, resiliency is measured according to ISO 8307, compression set is measured according to ISO 1856, tensile strength and elongation are measured according to ISO 1798, and tear strength is measured according to ISO 8067. Results are as indicated in Table 2.

**Table 2**

| Ex. or Comp. Sample No. | Comp. A* | Comp. B* | 1 | 2 | 3 | 4 | 5 |
|---|---|---|---|---|---|---|---|
| Density, kg/m³ | 36.2 | 33.4 | 32.2 | 30.5 | 32.1 | 29.0 | 29.2 |
| IFD | | | | | | | |
| 25% | 19.6 | 16.9 | 18.1 | 17.9 | 18.3 | 13.9 | 13.9 |
| 65% | 56.8 | 50.2 | 50.0 | 52.3 | 52.0 | 40.8 | 42.0 |
| Resiliency, % | 65 | 65 | 64 | 64 | 64 | 67 | 65 |
| Tensile Str., kPa | 1.35 | 1.36 | 1.56 | 1.34 | 1.57 | 1.40 | 1.20 |
| Elongation, % | 97 | 95 | 103 | 98 | 96 | 99 | 92 |
| Tear Str., N/m | 0.54 | 0.53 | 0.56 | 0.56 | 0.54 | 0.49 | 0.45 |
| 50% dry compres. set, % | 7.0 | 7.9 | 6.9 | 7.9 | 6.3 | 5.1 | 5.6 |
| 50% wet compres. set, % | 21.0 | 21.1 | 21.0 | 20.3 | 21.7 | 16.6 | 17.1 |
| Airflow, ft³/min (L/min) | 2.4 | 2.5 | 2.2 | 2.9 | 2.6 | 4.1 | 2.7 |

| | | | | | | | |
|---|---|---|---|---|---|---|---|
| *Not an example of the invention. | | | | | | | |

Comparative Samples A and B represent conventional automotive seating foams, and are therefore benchmarks for comparison. Examples 1-3 represent attempts to reduce the density from the 33-36 kg/m³ range to the 30-32 kg/m³ range, or about a 10% reduction in foam density. This is accomplished by increasing the amount of water and isocyanate, which changes the structure of the foam by introducing a higher proportion of urea linkages. By increasing the amount of high functionality, high ethylene oxide polyol, resiliency and compression set remain essentially unchanged. Examples 4-5 represent a decrease in density of approximately 15-20%, compared to the Comparative Samples, yet resiliency is still maintained and compression sets are actually slightly lower, due to the presence of large (6 parts) amounts of the high functionality, high ethylene oxide polyol. These results are very unexpected in view of the large decrease in foam density. High functionality, high ethylene oxide polyols such as are used in these experiments are not heretofore known to have meaningful effects on resiliency or compression set.

## Claims

1. A process for making a resilient polyurethane foam comprising forming a foam formulation containing
(a) a dispersion of polymer particles in one or more polyether polyols, wherein each of said polyether polyols has a hydroxyl equivalent weight of 250 or more, the average equivalent weight of the polyether polyol(s) is from 1400 to 2200, the average nominal hydroxyl functionality of the polyether polyol(s) is from 3.5 to 5.0, the polyether polyol(s) have an average oxyethylene content of from 8 to 25% by weight and an average primary hydroxyl content of at least 50%, and wherein the polymer particles constitute from 8 to 30% of the weight of the dispersion;
(b) from 2 to 10 parts by weight, per 100 parts by weight of component (a), of one or more high functionality, high-ethylene oxide polyols which have an average oxyethylene content of from 26 to 100% by weight, an average hydroxyl equivalent weight of from 1400 to 2200 and an average nominal hydroxyl functionality of from 6 to 10;
(c) from 4 to 7 parts by weight water per 100 parts by weight of component (a);
(d) at least one organic polyisocyanate; and
(e) at least one surfactant and at least one catalyst for the reaction of an isocyanate group with a hydroxyl group, and
introducing the foam formulation into a mold and curing the foam formulation in the mold to form a polyurethane foam having a core density of from 24 to 56 kg/m³.

2. The process of claim 1, wherein the foam formulation contains from 4 to 10 parts by weight of component (b) per 100 parts by weight of component (a).

3. The process of claim 1 or 2, wherein the high functionality, high-ethylene oxide polyol(s) have an average oxyethylene content of at least 50% by weight.

4. The process of any preceding claim, wherein the foam formulation contains from 5 to 8 parts by weight of component (b) per 100 parts by weight of component (a).

5. The process of any preceding claim, wherein the polyurethane foam has a core density of from 26 to 40 kg/m³.

6. The process of any preceding claim, wherein the polyurethane foam has a core density of from 26 to 33 kg/m³.

7. The process of any preceding claim, wherein component (d) is a mixture of toluene diisocyanate isomers with diphenylmethanediisocyanate or a polymeric MDI in which the toluene diisocyanate isomers constitute from 60-90% by weight of the mixture, and in which the 2,4-toluene diisocyanate isomer constitutes at least 70% by weight of the toluene diisocyanate isomers.

8. The process of any preceding claim which is a cold molding process.

9. A molded polyurethane foam made in accordance with the process of any of claims 1-8.

10. The molded polyurethane foam of claim 9, which has a core density of from 26 to 33 kg/m³.

11. A resilient molded polyurethane foam which is the reaction product of reactants that include
(a) a dispersion of polymer particles in one or more polyether polyols, wherein each of said polyether polyols has a hydroxyl equivalent weight of 250 or more, the average equivalent weight of the polyether polyol(s) is from 1400 to 2200, the average nominal hydroxyl functionality of the polyether polyol(s) is from 3.5 to 5.0, the polyether polyol(s) have an average oxyethylene content of from 8 to 25% by weight and an average primary hydroxyl content of at least 50%, and wherein the polymer particles constitute from 8 to 30% of the weight of the dispersion;
(b) from 2 to 10 parts by weight, per 100 parts by weight of component (a), of one or more high functionality, high-ethylene oxide polyols which have an average oxyethylene content of from 26 to 100% by weight, an average hydroxyl equivalent weight of from 1400 to 2200 and an average nominal hydroxyl functionality of from 6 to 10;
(c) from 4 to 7 parts by weight water per 100 parts by weight of component (a);
(d) at least one organic polyisocyanate,
wherein the polyurethane foam has a core density of from 24 to 56 kg/m³, a resiliency of at least 60% as measured by ISO 8307, a 50% dry compression set of no greater than 8% as measured by ISO 1856 with a 70°C oven and a 50% wet compression set of no greater than 20% as measured by ISO 1856 with a 50°C/95% relative humidity oven.

12. The resilient molded polyurethane foam of claim 11 which has a core density of from 26 to 33 kg/m³.

## Patentansprüche

1. Ein Verfahren zum Herstellen eines elastischen Polyurethanschaumes, das Folgendes beinhaltet: Bilden einer Schaumformulierung, enthaltend
(a) eine Dispersion von Polymerpartikeln in einem oder mehreren Polyetherpolyolen, wobei jedes der Polyetherpolyole ein Hydroxyläquivalentgewicht von 250 oder mehr aufweist, das durchschnittliche Äquivalentgewicht des Polyetherpolyols/der Polyetherpolyole von 1400 bis 2200 beträgt, die durchschnittliche nominale Hydroxylfunktionalität des Polyetherpolyols/der Polyetherpolyole von 3,5 bis 5,0 beträgt, das Polyetherpolyol/die Polyetherpolyole einen durchschnittlichen Oxyethylengehalt von 8 bis 25 Gew.-% und einen durchschnittlichen Gehalt an primärem Hydroxyl von mindestens 50 % aufweist/aufweisen und wobei die Polymerpartikel von 8 bis 30 % des Gewichts der Dispersion ausmachen;
(b) von 2 bis 10 Gewichtsteile, pro 100 Gewichtsteile der Komponente (a), eines oder mehrerer Ethylenoxid-reicher Polyole hoher Funktionalität, die einen durchschnittlichen Oxyethylengehalt von 26 bis 100 Gew.-%, ein durchschnittliches Hydroxyläquivalentgewicht von 1400 bis 2200 und eine durchschnittliche nominale Hydroxylfunktionalität von 6 bis 10 aufweisen;
(c) von 4 bis 7 Gewichtsteile Wasser pro 100 Gewichtsteile der Komponente (a);
(d) mindestens ein organisches Polyisocyanat; und
(e) mindestens ein Tensid und mindestens einen Katalysator für die Reaktion einer Isocyanatgruppe mit einer Hydroxylgruppe, und
Einführen der Schaumformulierung in eine Form und Härten der Schaumformulierung in der Form, um einen Polyurethanschaum mit einer Kerndichte von 24 bis 56 kg/m³ zu bilden.

2. Verfahren gemäß Anspruch 1, wobei die Schaumformulierung von 4 bis 10 Gewichtsteile der Komponente (b) pro 100 Gewichtsteile der Komponente (a) enthält.

3. Verfahren gemäß Anspruch 1 oder 2, wobei das Polyol/die Polyole mit hoher Funktionalität und reich an Ethylenoxid einen durchschnittlichen Oxyethylengehalt von mindestens 50 Gew.-% aufweist/aufweisen.

4. Verfahren gemäß einem der vorhergehenden Ansprüche, wobei die Schaumformulierung von 5 bis 8 Gewichtsteile der Komponente (b) pro 100 Gewichtsteile der Komponente (a) enthält.

5. Verfahren gemäß einem der vorhergehenden Ansprüche, wobei der Polyurethanschaum eine Kerndichte von 26 bis 40 kg/m³ aufweist.

6. Verfahren gemäß einem der vorhergehenden Ansprüche, wobei der Polyurethanschaum eine Kerndichte von 26 bis 33 kg/m³ aufweist.

7. Verfahren gemäß einem der vorhergehenden Ansprüche, wobei die Komponente (d) eine Mischung aus Toluendiisocyanat-Isomeren mit Diphenylmethandiisocyanat oder einem polymeren MDI ist, wobei die Toluendiisocyanat-Isomere 60-90 Gew.-% der Mischung ausmachen und wobei das 2,4-Toluendiisocyanat-Isomer mindestens 70 Gew.-% der Toluendiisocyanat-Isomere ausmacht.

8. Verfahren gemäß einem der vorhergehenden Ansprüche, das ein Kaltformverfahren ist.

9. Ein geformter Polyurethanschaum, der gemäß dem Verfahren aus einem der Ansprüche 1-8 hergestellt ist.

10. Geformter Polyurethanschaum gemäß Anspruch 9, der eine Kerndichte von 26 bis 33 kg/m³ aufweist.

11. Ein elastischer geformter Polyurethanschaum, der das Reaktionsprodukt von Reaktanten ist, die Folgendes umfassen:
(a) eine Dispersion von Polymerpartikeln in einem oder mehreren Polyetherpolyolen, wobei jedes der Polyetherpolyole ein Hydroxyläquivalentgewicht von 250 oder mehr aufweist, das durchschnittliche Äquivalentgewicht des Polyetherpolyols/der Polyetherpolyole von 1400 bis 2200 beträgt, die durchschnittliche nominale Hydroxylfunktionalität des Polyetherpolyols/der Polyetherpolyole von 3,5 bis 5,0 beträgt, das Polyetherpolyol/die Polyetherpolyole einen durchschnittlichen Oxyethylengehalt von 8 bis 25 Gew.-% und einen durchschnittlichen Gehalt an primärem Hydroxyl von mindestens 50 % aufweist/aufweisen und wobei die Polymerpartikel von 8 bis 30 % des Gewichts der Dispersion ausmachen;
(b) von 2 bis 10 Gewichtsteile, pro 100 Gewichtsteile der Komponente (a), eines oder mehrerer Ethylenoxid-reicher Polyole hoher Funktionalität, die einen durchschnittlichen Oxyethylengehalt von 26 bis 100 Gew.-%, ein durchschnittliches Hydroxyläquivalentgewicht von 1400 bis 2200 und eine durchschnittliche nominale Hydroxylfunktionalität von 6 bis 10 aufweisen;
(c) von 4 bis 7 Gewichtsteile Wasser pro 100 Gewichtsteile der Komponente (a);
(d) mindestens ein organisches Polyisocyanat,
wobei der Polyurethanschaum eine Kerndichte von 24 bis 56 kg/m³, eine Elastizität von mindestens 60 %, wie nach ISO 8307 gemessen, einen 50-%- Trockendruckverformungsrest von nicht mehr als 8 %, wie nach ISO 1856 mit einem Ofen bei 70 °C gemessen, und einem 50-%-Nassdruckverformungsrest von nicht mehr als 20 %, wie nach ISO 1856 mit einem Ofen bei 50 °C/95 % relativer Feuchtigkeit gemessen, aufweist.

12. Elastischer geformter Polyurethanschaum gemäß Anspruch 11, der eine Kerndichte von 26 bis 33 kg/m³ aufweist.

## Revendications

1. Un procédé destiné à la réalisation d'une mousse de polyuréthane résiliente comprenant le fait de former une formulation de mousse contenant
(a) une dispersion de particules de polymère dans un ou plusieurs polyéther polyols, où chacun desdits polyéther polyols a un poids équivalent en hydroxyle de 250 ou plus, le poids équivalent moyen du ou des polyéther polyols va de 1 400 à 2 200, la fonctionnalité hydroxyle nominale moyenne du ou des polyéther polyols va de 3,5 à 5,0, le ou les polyéther polyols ont une teneur en oxyéthylène moyenne allant de 8 à 25 % en poids et une teneur en hydroxyles primaires moyenne d'au moins 50 %, et où les particules de polymère constituent de 8 à 30 % du poids de la dispersion ;
(b) de 2 à 10 parties en poids, pour 100 parties en poids du composant (a), d'un ou de plusieurs polyols à fort oxyde d'éthylène et forte fonctionnalité, lesquels ont une teneur en oxyéthylène moyenne allant de 26 à 100 % en poids, un poids équivalent en hydroxyle moyen allant de 1 400 à 2 200 et une fonctionnalité hydroxyle nominale moyenne allant de 6 à 10 ;
(c) de 4 à 7 parties en poids d'eau pour 100 parties en poids du composant (a) ;
(d) au moins un polyisocyanate organique ; et
(e) au moins un tensioactif et au moins un catalyseur pour la réaction d'un groupe isocyanate avec un groupe hydroxyle, et
le fait d'introduire la formulation de mousse dans un moule et de faire durcir la formulation de mousse dans le moule afin de former une mousse de polyuréthane ayant une masse volumique de coeur allant de 24 à 56 kg/m³.

2. Le procédé de la revendication 1, où la formulation de mousse contient de 4 à 10 parties en poids du composant (b) pour 100 parties en poids du composant (a).

3. Le procédé de la revendication 1 ou de la revendication 2, où le ou les polyols à fort oxyde d'éthylène et forte fonctionnalité ont une teneur en oxyéthylène moyenne d'au moins 50 % en poids.

4. Le procédé de n'importe quelle revendication précédente, où la formulation de mousse contient de 5 à 8 parties en poids du composant (b) pour 100 parties en poids du composant (a).

5. Le procédé de n'importe quelle revendication précédente, où la mousse de polyuréthane a une masse volumique de coeur allant de 26 à 40 kg/m³.

6. Le procédé de n'importe quelle revendication précédente, où la mousse de polyuréthane a une masse volumique de coeur allant de 26 à 33 kg/m³.

7. Le procédé de n'importe quelle revendication précédente, où le composant (d) est un mélange d'isomères de toluène diisocyanate, avec du diphénylméthanediisocyanate ou un MDI polymérique dans lequel les isomères de toluène diisocyanate, constituent de 60 à 90 % en poids du mélange, et dans lequel l'isomère de 2,4-toluène diisocyanate, constitue au moins 70 % en poids des isomères de toluène diisocyanate.

8. Le procédé de n'importe quelle revendication précédente, lequel est un procédé de moulage à froid.

9. Une mousse de polyuréthane moulée réalisée conformément au procédé de n'importe lesquelles des revendications 1 à 8.

10. La mousse de polyuréthane moulée de la revendication 9, laquelle a une masse volumique de coeur allant de 26 à 33 kg/m³.

11. Une mousse de polyuréthane moulée résiliente, laquelle est le produit de la réaction de réactifs qui incluent
(a) une dispersion de particules de polymère dans un ou plusieurs polyéther polyols, où chacun desdits polyéther polyols a un poids équivalent en hydroxyle de 250 ou plus, le poids équivalent moyen du ou des polyéther polyols va de 1 400 à 2 200, la fonctionnalité hydroxyle nominale moyenne du ou des polyéther polyols va de 3,5 à 5,0, le ou les polyéther polyols ont une teneur en oxyéthylène moyenne allant de 8 à 25 % en poids et une teneur en hydroxyles primaires moyenne d'au moins 50 %, et où les particules de polymère constituent de 8 à 30 % du poids de la dispersion ;
(b) de 2 à 10 parties en poids, pour 100 parties en poids du composant (a), d'un ou de plusieurs polyols à fort oxyde d'éthylène et forte fonctionnalité, lesquels ont une teneur en oxyéthylène moyenne allant de 26 à 100 % en poids, un poids équivalent en hydroxyle moyen allant de 1 400 à 2 200 et une fonctionnalité hydroxyle nominale moyenne allant de 6 à 10 ;
(c) de 4 à 7 parties en poids d'eau pour 100 parties en poids du composant (a) ;
(d) au moins un polyisocyanate organique,
où la mousse de polyuréthane a une masse volumique de coeur allant de 24 à 56 kg/m³, une résilience d'au moins 60 % telle que mesurée par ISO 8307, une déformation rémanente après compression en milieu sec à 50 % qui ne dépasse pas les 8 % telle que mesurée par ISO 1856 avec un four à 70 °C et une déformation rémanente après compression en milieu humide à 50 % qui ne dépasse pas les 20 % telle que mesurée par ISO 1856 avec un four à 50 °C/95 % d'humidité relative.

12. La mousse de polyuréthane moulée résiliente de la revendication 11, laquelle a une masse volumique de coeur allant de 26 à 33 kg/m³.
